(19) Europäisches Patentamt / European Patent Office / Office européen des brevets

(11) **EP 3 467 128 B1**

(12) **EUROPEAN PATENT SPECIFICATION**

(45) Date of publication and mention of the grant of the patent:
**01.09.2021   Bulletin 2021/35**

(21) Application number: **18199386.6**

(22) Date of filing: **09.10.2018**

(51) Int Cl.:
*C22C 33/02* (2006.01)    *C22C 38/54* (2006.01)
*B22F 5/00* (2006.01)    *C22C 38/00* (2006.01)
*C21D 9/00* (2006.01)    *C22C 1/02* (2006.01)
*C22C 38/44* (2006.01)    *C22C 38/02* (2006.01)
*C22C 38/42* (2006.01)    *C22C 38/04* (2006.01)
*B22F 1/00* (2006.01)    *C22C 38/50* (2006.01)
*C22C 38/48* (2006.01)    *C22C 38/46* (2006.01)
*C22C 38/52* (2006.01)    *C21D 6/00* (2006.01)
*C21D 1/25* (2006.01)

(54) **EXTRUSION DIE MADE OF HOT WORKING STEEL AND PRODUCTION METHOD THEREOF**

EXTRUDERDÜSE AUS WARMARBEITSSTAHL UND HERSTELLUNGSVERFAHREN DAFÜR

FILIÈRE D'EXTRUSION EN ACIER POUR TRAVAIL À CHAUD ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **09.10.2017   SE 1751249**

(43) Date of publication of application:
**10.04.2019   Bulletin 2019/15**

(73) Proprietor: **WEFA Singen GmbH
78224 Singen (DE)**

(72) Inventors:
• **Maier Joachim
78224 Singen (DE)**
• **Maier Oliver
78315 Radolfzell (DE)**

(74) Representative: **Patent- und Rechtsanwälte Behrmann Wagner
PartG mbB
Hegau-Tower
Maggistraße 5 (11. OG)
78224 Singen (DE)**

(56) References cited:
**EP-A1- 1 920 079     EP-A1- 3 050 985
EP-A1- 3 159 141**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to an extrusion die of steel suitable for hot working tools. In an embodiment, the invention relates to extrusion dies made form precipitation hardening steel suitable for the manufacturing of hot work tools requiring a high hardness and a high tempering resistance.

Extrusion tools, especially for the processing of aluminum-containing extrusion materials, are well known in the art. For example, EP 1 011 885 B1 of the applicant discloses a method for producing an extrusion tool in which a tool body usually produced by machining from a suitable hot-work steel is optionally provided with a coating which improves the abrasion properties in relation to the extruded material in extrusion operation.

In general, the particular circumstances of the extrusion technology, in particular of metallic extruded materials, namely a continuous, comparatively slow flow of the ductile extruded metal on or along the (stationary) tool surface under high pressure and at high temperature, require special properties of the tool with regard to wear resistance, but at the same time also elasticity, resilience and yieldingness of the tool used, wherein in particular the high process temperatures, typically between about 450 ° C and 630 ° C during extrusion, require additional features of the extrusion die such as the tempering resistance and the permanent high-temperature strength (Dauerwarmfestigkeit) of the metals used for the tools.

The technology disclosed in EP 1 011 885 B1 of the Applicant for coating an extrusion die or tool with a coating deposited at high temperatures (typically above 1000 ° C.) leads to good coating properties of the tool, especially from a wear point of view. However, such high coating temperatures often also cause the hot working steels used as the tool substrate to overheat, with detrimental effects in terms of embrittlement, coarse grain formation, grain boundary occupation and other effects all reducing toughness of the tool, which in view of the above requirements of an ideal extrusion tool - comprising a hard coating on a flexible metal substrate - is potentially disadvantageous. This in turn leads to relatively rapid wear of such coated tools. In addition, there is the problem that in pressing or extrusion operation, the achievable pressing speed is limited in fact by the resulting heating of the tool; this leads to the reduction of the substrate strength, associated with a deterioration of the adhesion of the coating.

Applicant's EP 2 558 614 B1 describes in the form of a so-called medium temperature (MT) coating a way in which the (CVD) coating can be applied at temperatures below about 950 °C, with significantly more favorable properties with regard to Toughness and wear resistance. However, such extruding tools still have the problem that a usable extrusion or feed rate is limited in the extrusion mode and in particular an operation above a threshold leads to overheating of the extrusion tool, again with adverse effects on the life and wear properties and surface quality of the extrusion tool or the extruded product produced in the pressing operation.

Also, the problem of known processes for the production of extrusion dies, from highly heat-resistant material and thus suitable for the applications mentioned material is that usually used alloys, such as e.g. Inconel 718, are difficult and expensive to process. Especially when using a cutting manufacturing technology special requirements for the cutting tools to be used as well as the associated cutting manufacturing methods are needed and are therefore typically associated with high production costs.

For hot working application, such as extrusion dies, it has been common to use different kinds of hot working tool steels, in particular 5 % Cr steels like H11 and H13 is a premium hot work tool of this type. Uddeholm DIEVAR® is a premium hot work tool of this type. It is a high performance chromium-molybdenum-vanadium steel produced by ESR. It contains balanced carbon and vanadium contents as described in WO9950468 A1.

Although the vanadium alloyed tool steels produced by ESR have better properties than conventionally produced tool steels with respect to many properties there is a need for further improvements in order to reduce the risk for hot work tool failures. In addition, it would be beneficial to further improve the hot strength and temper resistance of hot work tool steel in order to prolong the service life of the respective extrusion die.

It is also known to use maraging steels for hot work applications. Maraging steels are often stainless and embrace 17-7PH, 17-4 PH, 15-5 PH, PH 15-7Mo, PH 14-8Mo and 25 PH 13-8Mo. The latter steel is also designated 1.4534, X3CrNiMoAl13-8-2 and S13800.

From EP 1 920 079 A1 a fully dense, powder-metallurgy produced maraging steel alloy article of prealloyed powder for use as a tool for high temperature applications is known. The article in the as-produced condition having a hardness less than 40 HRC to provide machinability and thereafter the article upon maraging heat treatment having a hardness greater than 45 HRC. Further a method for producing this article comprises compacting prealloyed powder to produce a fully dense article having a hardness less than 40 HRC and thereafter maraging heat treating to a hardness greater than 45 HRC is disclosed.

Document EP 3050985 A1 further discloses a metal powder for powder metallurgy particles, which contain Fe as a principal component, Cr in a proportion of 10 to 30 mass%, C in a proportion of 0.1 to 2 mass%, and Si in a proportion of 0.2 to 1.5 mass%, and in which when one element selected from the group consisting of Ti, V, Y, Zr, Nb, Hf, and Ta is defined as a first element, and one element selected from the group, and having a higher group number in the periodic table than that of the first element or having the same group number in the periodic table as that of the first element and a higher period number in the periodic table than that of the first element is defined as a second element, the first element is contained in a proportion of 0.01 to 0.5 mass%, and the second element is contained in a proportion of 0.01 to 0.5 mass%, wherein the number of crystals in the cross section of the particle is 1 or more and 5 or less on average.

EP 3 159 141 A1 teaches a powder material that has good fluidity and is used for powder additive manufacturing. The powder material of this document is used in powder additive manufacturing. The powder material is formed of particles having a form of secondary particles that are formed with primary particles bound three-dimensionally with interspaces. The secondary particles forming the powder material preferably have an average particle diameter of 1 μm or larger, but 100 μm or smaller. The secondary particles forming the powder material are preferably granulated particles. The powder additive manufacturing method of this invention is carried out, using the powder material.

This invention is directed to an improved extrusion die from hot work tool steel. In particular, the invention is directed to an extrusion die of hot work tool steel having a high hardness and a high temper resistance.

The object of the present invention is to provide an extrusion die having an improved property profile for hot working.

In addition thereto, the invention aims at providing extrusion dies made from metal or alloy in form of powder, in particular but not restricted to steel powder suitable for Additive Manufacturing (AM).

A further object is to provide extrusion dies, having a prolonged life. A further object of the invention is to provide a method for producing the respective extrusion dies.

The foregoing objects, as well as additional advantages are achieved to a significant measure by providing an extrusion dies made of steel as defined in the claims.

The general object is solved by providing an extrusion die made of a steel according to the appended claim 1.

The importance of the separate elements and their interaction with each other as well as the limitations of the chemical ingredients of the claimed alloy are briefly explained in the following. All percentages for the chemical composition of the steel are given in

weight % (wt. %) throughout the description. The amount of phases is given in volume % (vol. %). Upper and lower limits of the individual elements can be freely combined within the limits set out in the claims.

**Carbon (0.01 - 0.08 %)**

Carbon is effective for improving the strength and the hardness of the die. However, if the content is too high, the steel may be difficult to machine after cooling from hot working. C is present in a minimum content of 0.01 %, preferably at least 0.02 %. The upper limit for carbon is 0.08 %, preferably 0.05 %. The nominal content is about 0.030 %.

**Silicon (0.05 - 0.6 %)**

Silicon is used for deoxidation. Si is also a strong ferrite former. Si is therefore limited to 0.6 %. The upper limit may be 0.55, 0.50, 0.40, 0.35, 0.34, 0.33, 0.32, 0.31, 0.30, 0.29 or 0.28 %. The lower limit may be 0.10, 0.12, 0.14, 0.16, 0.18 or 0.20%. Preferred ranges are 0.15 - 0.40 % and 0.20 - 0.35 %.

**Manganese (0.1 - 0.8 %)**

Manganese contributes to improving the hardenability of the steel and the extrusion die. If the content is too low then the hardenability may be too low. At higher sulphur contents manganese prevents red brittleness in the steel or extrusion die. Manganese shall therefore be present in a minimum content of 0.1 %, preferably at least 0.15, 0.20, 0.25 or 0.30 %. The steel shall contain maximum 0.8 % Mn, preferably maximum 0.75, 0.70, 0.65, 0.60, 0.50, 0.45, 0.40 or 0.35 %. A preferred range is 0.20 - 0.40 %.

**Chromium (3.9 - 6.1 %)**

Chromium is to be present in a content of at least 3.9 % in order to provide a good hardenability and corrosion resistance. If the chromium content is too high, this may lead to the formation of undesired phases. The upper limit is therefore 6.1 %.

**Nickel 1.0 - 3.0 %)**

Nickel is an austenite stabilizer, which suppresses the formation of delta ferrite. Nickel gives the steel a good hardenability and toughness. Nickel is also beneficial for the machinability and polishability of the steel for the extrusion die.

**Molybdenum (7.0 - 9.0 %)**

Mo in solid solution is known to have a very favourable effect on the hardenability. Molybdenum is a strong carbide forming element and also a strong ferrite former. Mo is in the present invention required for the formation of the precipitation hardening during aging. For this reason the amount of Mo is 7.0 to 9.0 %. The lower limit may be 7.1, 7.2, 7.3 or 7.4 %. The upper limit may be 8.9, 8.8, 8.7, 8.6, or 8.5 %.

**Nitrogen (0.01 - 0.15 %)**

Nitrogen is present in the range of 0.01 - 0.15 %, preferably 0.0 - 0.07 %. Nitrogen is a strong austenite former and also a strong nitride former. The inventors of the present invention have surprisingly found, that nitrogen can be deliberately added to the steel without impairing the polishability.

**Copper (0.2 - 6.5 %)**

Cu is an element, which contributes to increase the hardness and the corrosion resistance of the steel. The $\varepsilon$-Cu phase formed during aging not only reinforces the steel by precipitation hardening, but also affects the precipitation kinetics of the intermetallic phases. In addition thereto, it would appear that additions of Cu result in a slower growth of the intermetallic phases at higher working temperatures. The upper limit for Cu may be 6.0, 5.5, 4.5, 4.0, 3.5, 3.0, 2.5 or 2.0 %. The lower limit for Cu is 0.2, or preferably 0.3, 0.4, 0.5, 0.6, 0.7, 0.8 or 0.9 %. It is therefore considered one of the core inventive aspects of the extrusion dies according to this invention that the substrate materials made from the respective steel comprises copper according to the amount given above.

**Boron (0.002 - 2.0 %)**

Boron is an optional element that can be used in small amounts in order to increase the hardenability and to improve the hot workability of the extrusion die made from such stainless steel. The upper limit may then be set to 0.007, 0.006, 0.005 or 0.004 %.Boron can also be used in higher amounts as a hard phase-forming element. B should then be at least 0.2 % so as to provide the minimum amount of 3 % hard phase Mo2FeB2. The amount of B is limited to 2.0 % for not making the alloy too brittle. The lower limit may be set to 0.3, 0.4, 0.5, 0.6, 0.7, 0.8, 0.9, 1.0, 1.1, 1.2, 1.3, 1.4 or 1.5 %.
The upper limit may be set to 1.4, 1.5, 1.6, 1.7, 1.8 or 1.9 %.

**Sulphur (0.01 - 0.25 %)**

S may optionally be added in order to improve the machinability of the steel. If S is used for this purpose, then S is deliberately added to the steel in an amount of 0.01 -0.25 %. At higher sulphur contents there is a risk for red brittleness. Moreover, high sulphur contents may have a negative effect on the fatigue properties and on the polishability of the steel. The upper limit shall therefore be 0.25 %, preferably 0.1 % most preferably 0.03 %. A preferred range is 0.015 - 0.030 %. However, if not deliberately added, then the amount of S is restricted to impurity contents as set out below.

**Niobium ($\leq$ 1 %)**

Nb is a strong carbide and nitride former. The content of this element should therefore be limited in order to avoid the formation of undesired carbides and nitrides. The maximum amount of Nb is therefore 1 %.

**Ti, Zr, Ta, Hf and Y ($\leq$ 2 %)**

These elements may form compounds with C, B, N and/or O. They can be used to produce an Oxide Dispersion Strengthened (ODS) or a Nitride Dispersion Strengthened (NDS) alloy. The upper limit is then 2 % for each of these elements. The upper limit may be 1.5, 1.0, 0.5 or 0.3 %. However, if these elements are not deliberately added for making an ODS alloy, then the upper limit may be 0.1, 0.05, 0.01 or 0.005 %.

**Ca, Mg, O and REM (Rare Earth Metals)**

These elements may optionally be added to the steel in the claimed amounts for different reasons. These elements are commonly used to modify the non-metallic inclusion and/or in order to further improve the machinability, hot workability and/or weldability of the steel. The oxygen content is then limited to 0.03 %.
The oxide can be admixed to a powder of be formed in-situ, e.g. by gas atomizing, in particular by using Gas Atomizing Reaction Synthesis (GARS) or during an Additive Manufacturing (AM) method, in particular through atmospheric reaction in Liquid Metal Deposition (LMD).

**Impurity elements**

P, S and O are the main impurities, which may have a negative effect on the mechanical properties of the steel. P is limited to 0.05, or optionally to 0.04, 0.03 0.02 or 0.01 %. If sulphur is not deliberately added, then the impurity content of S is limited to 0.05, or optionally to 0.04, 0.003, 0.001, 0.0008, 0.0005 or even 0.0001%.

The alloys used for the extrusion dies of the present invention can be produced by any suitable method. Nonlimiting examples of suitable methods include:

a) Conventional melt metallurgy followed by casting and hot working.
b) Powder Metallurgy (PM).

PM powders can be produced by conventional gas- or water- atomization of pre-alloyed steel.

If the powder shall be used for AM of the extrusion die, then gas-atomization is the preferred atomization method, because it is important to use a technique, that produces powder particles having a high degree of roundness and a low amount of satellites. In particular, the close-coupled gas atomization method can be used for this purpose.

The maximum size of the powder particles for AM is 150 $\mu$m, and the preferred size range is 10 - 100 $\mu$m with a mean size of about 25 - 45 $\mu$m.

The AM methods of prime interest are Liquid Metal Deposition (LMD), Selective Laser Melting (SLM) and Electron Beam (EB) melting. The powder characteristics are also of importance for AM. The powder size distribution measured with a Camsizer according to ISO 4497 should fulfil the following requirements (in $\mu$m):

$$5 \le D10 \le 35$$

$$20 \le D50 \le 55$$

$$D90 \le 80$$

Preferably, the powder should fulfil the following size requirements (in $\mu$m):

$$10 \le D10 \le 30$$

$$25 \le D50 \le 45$$

$$D90 \le 70$$

Even more preferred is that the coarse size fraction D90 is limited to $\le$ 60 $\mu$m or even $\le$ 55 $\mu$m.

The sphericity of the powder should be high. The sphericity (SPHT) can be measured by a Camsizer and is definined in ISO 9276-6. SPHT = $4\pi$A/P2, where A is the measured area covered by a particle projection and P is the measured perimeter/circumference of a particle projection. The mean SPHT should be at least 0.85 and can preferably be at least 0.90, 0.91, 0.92 0.93, 0.94 or even 0.95. In addition, not more than 5 % of the particles should have a SPHT $\le$ 0.70. Preferably said value should be less than 0.70, 0.65, 0.55 or even 0.50. In addition to SPHT, the aspect ratio can be used in the classifying of the powder particles. The aspect ratio is defined as b/l, wherein b is the shortest width of the particle projection and I is the longest diameter. The mean aspect ratio should preferably be at least 0.85 or more preferably 0. 86, 0.87, 0.88, 0.89, or 0.90.

The inventive extrrusion die is made of an alloy that is a precipitation hardenable steel having a martensitic matrix.

In additive manufacturing (AM), such a steel powder for building the extrusion die is applied in layers and then solidified, in particular by at least partially melting laser energy input. Such manufacturing technologies, insofar as preferred implementation form of a process to produce the extrusion dies of the invention, as such in the form of so-called SLM (Selective Laser Melting), EBM (Electron Beam Melting) or LBM (Layer Metal Deposition) methods are known. In this way, then, in the manner of a multi-layered sintered body, the extrusion die of the invention is constructed before he further is subjected to a preferred heat aging at an aging temperature in the range between 570 ° C and 660 ° C, preferably at 620 ° C for a duration of at least two hours. This heat aging is carried out in the specified temperature range until a sufficient Rockwell hardness (HRC) of the extrusion die, for example of at least 45, preferably at least 48 and more preferably at least 51 is reached, after the molding is cooled to an ambient temperature.

It thus becomes clear that, in the context of the present invention, a martensitic hardenable steel may be used as the steel material to be pulverized and subsequently layered to build up the extrusion die. This allows thus the production of high-strength and at the same time tough extrusion dies, whereby, by the pulverization and subsequent building, the disadvantages of a corresponding and conventional process, such as machining to process a massive materialblock can be avoided. Also, the heat aging of the extrusion die according to the invention makes it possible to suitably adjust the layer structure in the hardness favorable for the purpose according to the invention, in particular advantageously above 48 HRC and not harder than 55 HRC, so that the present invention combines the greatest possible flexibility and simplicity in the production of the extrusion die with outstanding firm and tough properties.

This procedure leads to advantageous extrusion dies with virtually any form in the interior of the die body (substrate body). Cooling channel contour can be realized. It is further possible to guide the course of the cooling channel inside the body close to the contact surface, in the favorable case to follow a course or a contour of this contact surface or, in the case of a straight surface course, to run parallel thereto, so that practically along a course of the press channel contact surface extends inside the tool. Cooling channel contours ensure favorable heat dissipation. In this way, a significant lower extrusion material temperature relative to the ductile extrusion die is realized, which is in particular, particularly positive for a high surface quality of the extruded product to be produced, so that the potential for a significant increase in the extrusion speed and thus the processing volume with at least constant quality and / or positive influence the surface quality exists.

In the context of advantageous embodiments of the invention, the extrusion die is provided with a CVD coating, for example at an outer and/or extrusion material contact surface, which, having carbon and nitrogen, preferably with a ratio of C/N>1, is formed by depositing correspondingly suitable reaction gases in a CVD process; Also other coatings such as TiO, $Al_2O_3$, and/or TiBN can be deposited on at least parts of the extrusion die, especially on parts of the contact surface contacting the extrusion material. In particular, in case of additive manufacturing also causes such a CVD coating to adhere favorably to or on the tool substrate body produced according to the invention from the powdery material. Additionally or alternatively, such a coating can be applied as a PVD coating (PVD = physical vapor deposition), again alternatively as a so-called plasma-activated CVD coating (P-CVD). The respective coatings enhance the temper resistance of the extrusion die and enable a better and longer lasting supporting effect.

The extrusion die can be obtained by hot isostatic pressing (HIP) of the steel or alloy powder, as described above.

Alternatively, the extrusion die may also be obtained by melting metallurgy or melting metal steel of the steel or alloy, as described above.

EXAMPLE

In this example two alloys suitable for the inventive extrusion dies are compared to the premium steel Uddeholm Dievar®

The alloys had the following nominal compositions (in wt. %):

|     | Steel 1 | Steel 2 | Uddeholm Dievar® |
| --- | --- | --- | --- |
| C   | 0.03 | 0.03 | 0.36 |
| Si  | 0.3  | 0.3  | 0.20 |
| Mn  | 0.3  | 0.3  | 0.5 |
| Cr  | 5    | 5    | 5 |
| Ni  | 2    | 2    | - |
| Mo  | 8    | 8    | 2.3 |
| V   | -    | -    | 0.55 |
| Co  | 11   | 11   | - |
| C u | 0.5  | 2.0  | - |
| N   | 0.03 | 0.03 | 0.007 |

balance iron and impurities.

The steel for the inventive extrusion dies (steel 1 and 2) were formed by melting and casting into small ingots of a weight of about 100 g. After cooling to room temperature, these steels were subjected to tempering twice for two hours (2x2) at 620 °C.

The comparative steel was conventionally produced and subjected to austenitization at 1020 °C in a vacuum furnace followed by gas quenching with a time of 100 s in the interval 800-500 °C (t8/5 = 100s). After cooling to room temperature also the comparative steel was subjected to tempering twice for two hours (2x2) at 615 °C.

The tempering resistance of the alloys was thereafter examined at a temperature of 600 °C. The results are given in Table 1.

Table 1. Tempering resistance at 600 °C. Hardness (HRC) as a function of time.

| Time (h) | Steel 1 | Steel 2 | Uddeholm Dievar® |
|---|---|---|---|
| 0 | 53.7 | 53.9 | 45.1 |
| 27 | 52.0 | 52.0 | 36.4 |
| 50 | 50.5 | 51.1 | 34.4 |
| 100 | 48.7 | 49.3 | 31.2 |

Although both steels for extrusion dies according to this invention (steel 1 and 2) had a higher initial hardness at the begining of the test it is apparent from Table 1 that the inventive steels had a significant better tempering resistance than the comparative steel Uddeholm Dievar®. The decrease in hardness after exposure to 600 °C for 100 hours was about 5 HRC for the inventive steels whereas it was about 14 HRC for the comparative steel. Accordingly, it may be concluded that the steel 1 and 2 have not only a remarkably high initial hardness but also a superior tempering resistance making them an ideal material for the inventive extrusion dies.

## Claims

1. An extrusion die made of steel for making a hot working tool, the steel consists of in weight % (wt. %):

| C | 0.01 - 0.08 |
|---|---|
| Si | 0.05 - 0.6 |
| Mn | 0.1 - 0.8 |
| Cr | 3.9 - 6.1 |
| Ni | 1.0 - 3.0 |
| Mo | 7.0 - 9.0 |
| Co | 9.0 - 12.5 |
| Cu | 0.2 - 6.5 |
| N | 0.01 - 0.15 |

$P \le 0.05$
$S \le 0.05$
optionally

| B | 0.002 - 2.0 |
|---|---|
| S | 0.01 - 0.03 |
| V | <2 |
| Nb | $\le 1$ |
| Ti | $\le 2$ |
| Zr | $\le 2$ |
| Ta | $\le 2$ |
| Hf | $\le 2$ |
| Y | $\le 2$ |
| Ca | < 0.009 |
| Mg | < 0.01 |
| REM | < 0.2 |
| O | $\le 0.03$ |

Fe and impurities balance.

2. A extrusion die according to claim 1, which fulfils at least one of the following requirements:

| | |
|---|---|
| C | 0.01 - 0.06 |
| Si | 0.1 - 0.5 |
| Mn | 0.1 - 0.6 |
| Cr | 4.0 - 6.0 |
| Ni | 1.2 - 2.9 |
| Mo | 7.1 - 8.9 |
| Co | 9.5 - 12.0 |
| Cu | 0.3 - 5.0 |
| N | 0.02 - 0.08 |

3. An extrusion dies according to claim 1, which fulfils the following requirements:

| | |
|---|---|
| C | 0.025 - 0.055 |
| Si | 0.15 - 0.40 |
| Mn | 0.15 - 0.50 |
| Cr | 4.5 - 5.5 |
| Ni | 1.5 - 2.5 |
| Mo | 7.5 - 8.5 |
| Co | 10.5 - 11.7 |
| Cu | 0.4 - 4.0 |
| N | 0.02 - 0.06 |

4. Method for producing an extrusion die made of steel for making a hot working tool wherein the extrusion die is made from a pre-alloyed powder and having a composition as defined in claims 1 to 3.

5. Method according to claim 4 wherein the powder is produced by gas atomizing, at least 80 % of the powder particles have a size in the range of 5 to 150 $\mu$m the and wherein the powder fulfils at least one of the following requirements:

Powder size distribution in $\mu$m:
$5 \leq D10 \leq 35$
$20 \leq D150 \leq 55$
$D90 \leq 80$
Mean sphericity, SPHT $\geq 0.85$
Mean aspect ratio, b/l $\geq 0.85$ wherein SPHT = $4\pi A/P^2$, where A is the measured area covered by a particle projection and P is the measured perimeter/circumference of a particle projection and the sphericity SPHT is measured by a Camsizer in accordance with ISO 9276-6, and wherein b is the shortest width of the particle projection and I is the longest diameter, wherein the powder size distribution is measured with a Camsizer according to ISO 4497.

6. Method according to claim 5, wherein at least 90 % of the powder particles have a size in the range of 10 to 100 $\mu$m the and wherein the powder fulfils 15 at least one of the following requirements:

Powder size distribution in $\mu$m:
$10 \leq D10 \leq 30$
$25 \leq D50 \leq 45$
$D90 \leq 70$
Mean sphericity, SPHT $\geq 0.90$
Mean aspect ratio, b/l $\geq 0.88$

7. Method according to any of the claims 4 to 6, wherein the extrusion die is obtained by hot isostatic pressing HIP of the pre-alloyed powder having a composition as defined in claims 1 to 3.

8. Method according to any of the claims 4 to 6, wherein the extrusion die is obtained by melting metal steel of the steel having a composition as defined in claims 1 to 3.

9. An extrusion die according to any of the claims 1 to 3, preferably produced according to the method of claims 4 to 8, wherein at least parts of the contact surface for contacting the extrusion material comprises a coating, preferably obtained by a CVD- or PVD-process, in particular comprising Carbon (C) and Nitrogen (N) in a ratio C/N> 1 and/or a coating comprising at least on of TiO, $Al_2O_3$, TiBN, preferably as a cover layer.

**Patentansprüche**

1. Extrusionswerkzeug aus Stahl zur Herstellung eines Warmarbeitswerkzeugs, wobei der Stahl in Gewichts-% (Gew.-%) aus Folgendem besteht:

| | |
|---|---|
| C | 0,01 - 0,08 |
| Si | 0,05 - 0,6 |
| Mn | 0,1 - 0,8 |
| Cr | 3,9 - 6,1 |
| Ni | 1,0 - 3,0 |
| Mo | 7,0 - 9,0 |
| Co | 9,0 - 12,5 |
| Cu | 0,2 - 6,5 |
| N | 0, 01 - 0,15 |
| P | $\leq 0,05$ |
| S | $\leq 0,05$ |

optional

| | |
|---|---|
| B | 0,002 - 2,0 |
| S | 0,01 - 0,03 |
| V | <2 |
| Nb | $\leq 1$ |
| Ti | $\leq 2$ |
| Zr | $\leq 2$ |
| Ta | $\leq 2$ |
| Hf | $\leq 2$ |
| Y | $\leq 2$ |
| Ca | < 0,009 |
| Mg | < 0,01 |
| REM | < 0,2 |
| O | $\leq 0,03$ |

Rest Fe und Verunreinigungen.

2. Extrusionswerkzeug nach Anspruch 1, das mindestens eine der folgenden Anforderungen erfüllt:

| | |
|---|---|
| C | 0,01 - 0,06 |
| Si | 0,1 - 0,5 |
| Mn | 0,1 - 0,6 |
| Cr | 4,0 - 6,0 |

(fortgesetzt)

| | |
|---|---|
| Ni | 1,2 - 2,9 |
| Mo | 7,1 - 8,9 |
| Co | 9,5 - 12,0 |
| Cu | 0,3 - 5,0 |
| N | 0,02 - 0,08. |

3. Extrusionswerkzeug nach Anspruch 1, das die folgenden Anforderungen erfüllt:

| | |
|---|---|
| C | 0,025 - 0,055 |
| Si | 0,15 - 0,40 |
| Mn | 0,15 - 0,50 |
| Cr | 4,5 - 5,5 |
| Ni | 1,5 - 2,5 |
| Mo | 7,5 - 8,5 |
| Co | 10,5 - 11,7 |
| Cu | 0,4 - 4,0 |
| N | 0,02 - 0,06. |

4. Verfahren zur Herstellung eines Extrusionswerkzeugs aus Stahl zur Herstellung eines Warmarbeitswerkzeugs, wobei das Extrusionswerkzeug aus einem vorlegierten Pulver hergestellt wird und eine Zusammensetzung wie in den Ansprüchen 1 bis 3 definiert aufweist.

5. Verfahren nach Anspruch 4, wobei das Pulver durch Gaszerstäubung hergestellt wird, mindestens 80 % der Pulverpartikel eine Größe im Bereich von 5 $\mu$m bis 150 $\mu$m aufweisen und wobei das Pulver mindestens eine der folgenden Anforderungen erfüllt:

Pulvergrößenverteilung in $\mu$m:
$5 \le D10 \le 35$
$20 \le D50 \le 55$
$D90 \le 80$
mittlere Sphärizität, SPHT $\ge$ 0,85
mittleres Seitenverhältnis, b/l $\ge$ 0,85, wobei SPHT = $4\pi A/P^2$, wobei A die gemessene Fläche ist, die von einer Partikelprojektion abgedeckt wird, und P der gemessene Umfang einer Partikelprojektion ist und die Sphärizität SPHT von einem Camsizer gemäß ISO 9276-6 gemessen wird, und wobei b die kürzeste Breite der Partikelprojektion ist und l der längste Durchmesser ist, wobei die Pulvergrößenverteilung mit einem Camsizer gemäß ISO 4497 gemessen wird.

6. Verfahren nach Anspruch 5, wobei mindestens 90 % der Pulverpartikel eine Größe im Bereich von 10 $\mu$m bis 100 $\mu$m aufweisen und wobei das Pulver mindestens eine der folgenden Anforderungen erfüllt:

Pulvergrößenverteilung in $\mu$m:
$10 \le D10 \le 30$
$25 \le D50 \le 45$
$D90 \le 70$
mittlere Sphärizität, SPHT $\ge$ 0,90
mittleres Seitenverhältnis, b/l $\ge$ 0,88.

7. Verfahren nach einem der Ansprüche 4 bis 6, wobei das Extrusionswerkzeug durch heißisostatisches Pressen HIP des vorlegierten Pulvers erhalten wird, das eine Zusammensetzung wie in Anspruch 1 bis 3 definiert aufweist.

8. Verfahren nach einem der Ansprüche 4 bis 6, wobei das Extrusionswerkzeug durch Schmelzen von Metallstahl des Stahls erhalten wird, der eine Zusammensetzung wie in Anspruch 1 bis 3 definiert aufweist.

9. Extrusionswerkzeug nach einem der Ansprüche 1 bis 3, bevorzugt hergestellt nach dem Verfahren der Ansprüche 4 bis 8, wobei zumindest Teile der Kontaktoberfläche zur Kontaktierung des Extrusionsmaterials eine Beschichtung, bevorzugt erhalten durch ein CVD- oder PVD-Verfahren, insbesondere umfassend Kohlenstoff (C) und Stickstoff (N) in einem Verhältnis C/N > 1 und/oder eine Beschichtung umfassend mindestens eines von TiO, $Al_2O_3$, TiBN, bevorzugt als Deckschicht, aufweisen.

**Revendications**

1. Filière d'extrusion en acier pour la fabrication d'un outil de travail à chaud, l'acier étant composé des éléments suivants en pourcentage en poids (% en poids) :

| | |
|---|---|
| C | 0,01 - 0,08 |
| Si | 0,05 - 0,6 |
| Mn | 0,1 - 0,8 |
| Cr | 3,9 - 6,1 |
| Ni | 1,0 - 3,0 |
| Mo | 7,0 - 9,0 |
| Co | 9,0 - 12,5 |
| Cu | 0,2 - 6,5 |
| N | 0,01 - 0,15 |
| P | $\leq$ 0,05 |
| S | $\leq$ 0,05 |

facultativement

| | |
|---|---|
| B | 0,002 - 2,0 |
| S | 0,01 - 0,03 |
| V | <2 |
| Nb | $\leq$ 1 |
| Ti | $\leq$ 2 |
| Zr | $\leq$ 2 |
| Ta | $\leq$ 2 |
| Hf | $\leq$ 2 |
| Y | $\leq$ 2 |
| Ca | < 0,009 |
| Mg | < 0,01 |
| REM | < 0,2 |
| O | $\leq$ 0,03 |

reste Fe et autres impuretés.

2. Filière d'extrusion selon la revendication 1 qui remplit au moins une des conditions suivantes :

| | |
|---|---|
| C | 0,01 - 0,06 |
| Si | 0,1 - 0,5 |
| Mn | 0,1 - 0,6 |
| Cr | 4,0 - 6,0 |
| Ni | 1,2 - 2,9 |
| Mo | 7,1 - 8,9 |
| Co | 9,5 - 12,0 |
| Cu | 0,3 - 5,0 |

(suite)

| | |
|---|---|
| N | 0,02 - 0,08 |

3. Filière d'extrusion selon la revendication 1 qui remplit les conditions suivantes :

| | |
|---|---|
| C | 0,025 - 0,055 |
| Si | 0,15 - 0,40 |
| Mn | 0,15 - 0,50 |
| Cr | 4,5 - 5,5 |
| Ni | 1,5 - 2,5 |
| Mo | 7,5 - 8,5 |
| Co | 10,5 - 11,7 |
| Cu | 0,4 - 4,0 |
| N | 0,02 - 0,06. |

4. Procédé de fabrication d'une filière d'extrusion en acier pour fabriquer un outil de travail à chaud, dans lequel la filière d'extrusion est fabriquée à partir d'une poudre pré-alliée et a une composition telle que définie dans les revendications 1 à 3.

5. Procédé selon la revendication 4, dans lequel la poudre est produite par atomisation de gaz, au moins 80 % des particules de poudre ont une taille dans la plage de 5 $\mu$m à 150 $\mu$m et dans lequel la poudre remplit au moins une des conditions suivantes :

distribution de taille de poudre en $\mu$m :
$5 \leq D10 \leq 35$
$20 \leq D50 \leq 55$
$D90 \leq 80$
sphéricité moyenne, SPHT $\geq 0,85$
rapport d'aspect moyen, b/l $\geq 0,85$, dans lequel SPHT = $4\pi A/P^2$, dans lequel A est la surface mesurée couverte par une projection de particule et P est le périmètre/la circonférence d'une projection de particule et la sphéricité SPHT est mesurée par un Camsizer selon ISO 9276-6, et dans lequel b est la largeur la plus courte de la projection de particule et l est le diamètre le plus long, dans lequel la distribution de taille de poudre est mesurée par un Camsizer selon ISO 4497.

6. Procédé selon la revendication 5, dans lequel au moins 90 % des particules de poudre ont une taille dans la plage de 10 $\mu$m à 100 $\mu$m et dans lequel la poudre remplit au moins une des conditions suivantes :

distribution de taille de poudre en $\mu$m :
$10 \leq D10 \leq 30$
$25 \leq D50 \leq 45$
$D90 \leq 70$
sphéricité moyenne, SPHT $\geq 0,90$
rapport d'aspect moyen, b/l $\geq 0,88$.

7. Procédé selon l'une quelconque des revendications 4 à 6, dans lequel la filière d'extrusion est obtenue par pressage isostatique à chaud HIP de la poudre pré-alliée qui une composition telle que définie dans les revendications 1 à 3.

8. Procédé selon l'une quelconque des revendications 4 à 6, dans lequel la filière d'extrusion est obtenue par la fusion de métal de l'acier qui a une composition telle que définie dans les revendications 1 à 3.

9. Filière d'extrusion selon l'une quelconque des revendications 1 à 3, de préférence fabriquée selon le procédé des revendications 4 à 8, dans lequel au moins des parties de la surface de contact pour contacter le matériau d'extrusion comprennent un revêtement, de préférence obtenu par un procédé CVD ou PVD, notamment comprenant du carbone (C) et de l'azote (N) d'un rapport de C/N > 1 et/ou un revêtement comprenant au moins un de TiO, $Al_2O_3$, TiBN, de

préférence comme couche de couverture.

**REFERENCES CITED IN THE DESCRIPTION**

**Patent documents cited in the description**

- EP 1011885 B1
- EP 2558614 B1
- WO 9950468 A1
- EP 1920079 A1
- EP 3050985 A1
- EP 3159141 A1